(19) Europäisches Patentamt / European Patent Office / Office européen des brevets

(11) **EP 2 901 121 B1**

(12) **EUROPEAN PATENT SPECIFICATION**

(45) Date of publication and mention
of the grant of the patent:
**29.03.2017 Bulletin 2017/13**

(21) Application number: **13766316.7**

(22) Date of filing: **24.09.2013**

(51) Int Cl.:
*G01F 1/34* (2006.01)   *G01L 9/00* (2006.01)
*G01F 1/38* (2006.01)

(86) International application number:
**PCT/EP2013/069829**

(87) International publication number:
**WO 2014/048911 (03.04.2014 Gazette 2014/14)**

(54) **CAPACITIVE PRESSURE SENSOR**

KAPAZITIVER DRUCKSENSOR

CAPTEUR DE PRESSION CAPACITATIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2012 EP 12186515**

(43) Date of publication of application:
**05.08.2015 Bulletin 2015/32**

(73) Proprietor: **BioFluidix GmbH**
**79110 Freiburg (DE)**

(72) Inventors:
• **KOLTAY, Peter**
**79110 Freiburg (DE)**

• **ERNST, Andreas**
**79283 Bollschweil (DE)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
**EP-A1- 0 017 200      DE-A1- 2 747 949**
**US-A1- 2005 204 822      US-A1- 2005 217 384**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a pressure sensor for measuring a fluid pressure of a fluid within a measurement chamber, and to a method for measuring a fluid pressure within the measurement chamber. Moreover, the present invention relates to a flow measurement sensor comprising at least one such pressure sensor.

Sensors for measuring the pressure or flow inside a (micro-) channel containing a fluid (liquid or gas) are used in a large number of applications in medical, pharmaceutical or chemical research and industry to transport, meter or dispense liquids or gases. In particular, many applications require small amounts of liquids, e.g. medical applications of drug delivery, metering and dispensing of liquids for industrial production, automated application of adhesives or underfill for electronic assemblies, etc. Most of these applications benefit from observation of the pressure or flow of the applied liquid inside the transport channel for precise dosage (metering), quality control or process monitoring. Since pressure or flow sensors which have to be in direct contact with the fluid and sensors in accordance with the state of the art are usually expensive, there is currently no satisfactory solution that allows for disposable use of pressure or flow sensors with high sensitivity. According to the state of the art sensors usually have to be cleaned and re-used, which is costly and time-consuming or even prohibitive, e.g. for medical applications.

Today, state of the art sensors are mainly based on piezoresistive or thermal transduction principles, and devices are mostly fabricated in MEMS technology. They are usually not applicable to non-contact measurements at low flow rates and pressures. Separating the sensor element from the fluid-containing elements implies certain efforts in packaging, thus increasing the costs of the systems and making disposable use prohibitive.

As far as pressure and flow measurement sensors are concerned, the following publications are known:

- US4,384,578 describes a flow sensor. Flow metering is effected by means of a thermal principle.

- JP3149030A describes pressure metering which is effected by a conventional MEMS pressure sensor.

- WO94/04073 describes a flow monitoring system. Flow metering is effected by means of an acoustic principle (Doppler shift).

- JP2004117366A describes a flow measuring machine. Flow metering is effecetd by a rotating disc that is read out by an optical sensor (LED & photo diode).

- WO2006/060226A1 describes a pressure sensor. The sensor measures a pressure change due to a change in the resonance frequency between a capacitance and an inductance. One of the electrodes has to be disposed with the fluid-contaminated part (i.e. membrane).

- Chia-Chu Chiang, Chou-Ching K. Lin, Ming-Shuang Ju, "An implantable capacitive pressure sensor for biomedical applications", Sensors and Actuators A, 134 (2007) 382-388, describe a capacitive pressure sensor. The pressure sensor is based on the deformation of a PDMS layer which is embedded between two electrodes. The electrodes are formed by gold layers, whereby the PDMS layer is a pressure-sensitive dielectric. In order to realize a "tube sensor", such a pressure sensor is wrapped around a silicone tube and jacketed with a PI tube. The distance between the two electrodes varies depending on the thickness of the PDMS layer, i.e. the measurement principle is based on the deformation of the dielectric material (PDMS) that leads to a change in the electrode distance. When a pressure is applied to the sensor, the gap between two sensing electrodes is reduced and the capacitance rises accordingly.

- R. Puers, "Capacitive sensors; when and how to use them", Sensors and Actuators A 37- 38, (1993), pp. 93 - 105 describes a capacitive pressure sensor. The pressure sensor comprises fixed electrodes and suspended electrodes, wherein the suspended electrodes move with respect to the fixed electrodes. The higher the pressure at the suspended electrode, the smaller the distance between the two electrodes.

- R.E. Oosterbroek, T.S.J. Lammerink, J.W. Berenschot, G.J.M. Krijnen, M.C. Elwenspoek, A. van den Berg, "A micromachined pressure/flow sensor", Sensors and Actuators 77, 1999, 167-177 describe a differential pressure flow sensor. The flow sensor comprises two capacitive or piezo-resistive pressure sensors. In the capacitive sensor, the distance between the plates will be reduced when the pressure rises.

- A. Ernst, L. Ju, B. Vondenbusch, R. Zengerle, P. Koltay "Noncontact Determination of Velocity and Volume of Nanoliter Droplets on the Fly" IEEE Sensors Journal, Vol. 11, No. 8, 2011, 1736 - 1742, describe a sensor for measuring volume and velocity of droplets. The principle is based on the interaction of dispensed single droplets of sample liquid passing the electric field of an open plate capacitor. The effect depends on droplet parameters like volume, velocity, and dielectric constant.

- Cheng-Ta Chiang, Yu-Chung Huang, "A Semicylindrical Capacitive Sensor With Interface Circuit Used for Flow Rate Measurement", IEEE Sensor Journal, Vol. 6, No. 6, 2006, 1564 - 1570, describe a semicylindrical capacitive sensor used for flow rate measurement. The capacitance changes in dependence on the amount of unpolarized fluid flowing through the electric field per time unit.

Therefore, low-cost disposable sensors can hardly be found on the market, or only with poor specifications or at relatively high cost.

The object of the present invention is to provide a pressure sensor for measuring a fluid pressure within a measurement chamber, which can be used in a flexible manner, and to a flow sensor for measuring a fluid flow, which uses such a pressure sensor.

This object is solved by the subject matter of claim 1.

According to embodiments of the invention, the pressure sensor comprises the measurement chamber having a mechanically deformable wall, wherein the shape of the measurement chamber varies depending on a pressure within the measurement chamber. The pressure sensor further comprises at least two measurement electrodes, wherein the measurement chamber is arranged relative to the measurement electrodes to be arranged within a region of an electrical field originating from the measurement electrodes upon application of a potential to the measurement electrodes, wherein the at least two measurement electrodes form a capacitor, wherein an influence of a variation of the shape of the measurement chamber on the electrical field can be detected as a change in the capacity of the capacitor, wherein the measurement electrodes are arranged at a fixed distance from each other, and wherein the measurement chamber is arranged between the two measurement electrodes, with a space between each of the two measurement electrodes and the measurement chamber.

The present invention is based on the idea that an improved pressure sensor for measuring a fluid pressure of a fluid within a deformable measurement chamber can be implemented by arranging the measurement chamber relative to one or more measurement electrodes so that the total amount of a fluid, having a certain permittivity different from a measurement chamber surrounding media, arranged within the measurement chamber has an influence on the measurement effect. Thus, the fluid pressure within the measurement chamber influences the shape of the measurement chamber and, therefore, the amount and spatial distribution of the measurement chamber fluid arranged in the electrical field. This may result in a change of the amount and / or distribution of dielectric material arranged in the electrical field (mainly with respect to the fluid but also with respect to the material the measurement chamber is made of and the measurement chamber surrounding media), which may be detected as a change in the electrical field of a measurement electrode or as a change in the capacity between two measurement electrodes. Alternatively or additionally, this may result in a change in a distance between two measurement electrodes, which may be detected as a change in the capacity between the two measurement electrodes.

The deformable wall of the measurement chamber may be formed of an elastic material, the shape of which depends on the pressure inside the measurement chamber, wherein the influence of the change of the shape of the measurement chamber can be detected.

According to an embodiment, the pressure sensor comprises a measurement chamber which is formed by an elastic tube. The cross section of the tube depends on the fluid pressure inside the tube, wherein an increasing fluid pressure results in an increased cross section of the tube. The cross section of the tube may be circular so that there are no edges and corners which would impede uniform expansion of the measurement chamber. Furthermore, the production of an elastic tube is easy and thereby inexpensive to implement.

The pressure sensor comprises at least two measurement electrodes forming a capacitor, wherein an influence of a variation of the shape of the measurement chamber on the electrical field can be detected as a change in the capacity of the capacitor. This provides the advantage that the capacitance between the two electrodes can be measured. The capacity of a capacitor is dependent on the plate area of the electrode, the distance between the electrodes, the amount of dielectric material in between the electrodes, the permittivity or the dielectric conductivity, which depends on the susceptibility of the dielectric material in the electrical fields and the spatial distribution of the dielectric material in between the electrodes. A change in the shape of the measurement chamber in the electric field of the capacitor goes along with a change of the amount and spatial distribution of the dielectric material in the electric field, which changes the capacitance of the capacitor. Further, the electrodes can also be attached directly to the surface of the measurement chamber. In this case in addition to the dielectric effects also the distance between the two electrodes is changed by a change in the shape of the measurement chamber. Both effects, the plate separation and the dielectric effects, change the capacitance of the capacitor. Thus, a change in the volume of the measurement chamber can be detected by either one of the effects individually or in combination.

The measurement chamber is arranged between the two measurement electrodes. When arranging the measurement chamber between the two measurement electrodes, the change in the shape of the measurement chamber and, thus, the change in capacitance can be determined more accurately.

According to an embodiment of the pressure sensor, the measurement electrodes comprise arcuate shapes. The arcuate shape allows the measurement chamber to be almost enclosed by the measurement electrodes and further increase the sensitivity of the applied capacitive measurement method. Arcuate measurement electrodes are particularly suitable for tubular measurement chambers. Since the measurement chamber is almost enclosed, a change in the shape of the measurement chamber can be measured very precisely.

The measurement electrodes are arranged at a fixed distance from each other. Due to the fixed distance between the two measurement electrodes, the capacitance of the capacitor is affected by the change in the dielectric effect only. It is possible to achieve a more linear behavior between the change in volume of the measurement chamber and the change in capacitance of the capacitor. Furthermore, by means of a fixed arrangement of the measurement electrodes, which are not mechanically coupled to the measurement chamber, the measurement chamber can easily be inserted into or removed from the measurement electrodes.

The measurement chamber is arranged between the two measurement electrodes with a space between each of the two measurement electrodes and the measurement chamber. Due to the space between the two measurement electrodes and the measurement chamber, the measurement chamber is free to deform subjected to a pressure exerted by a fluid inside the measurement chamber. Furthermore, the measurement chamber can easily be inserted between two measurement electrodes and removed from between the two measurement electrodes. In this way, for example, the measurement chamber can be implemented as a disposable measurement chamber and the measurement electrodes can be implemented as a part of a reusable, noncontaminated device, wherein fluid is surrounded by the measurement chamber and therefore, the fluid does not contaminate the measurement electrodes. Moreover, these elements can simply be joined and separated.

According to an embodiment of the pressure sensor, the measurement chamber is a disposable element, and the measurement electrode is part of a reusable element. Thus, more costly parts of the pressure sensor may be reusable, wherein the fluid, the pressure of which is to be measured, is confined within the measurement chamber and, therefore, does not come into contact with the reusable part of the pressure sensor. Thus, contamination of the reusable parts of the pressure sensor can be prevented. In medical and pharmaceutical applications, the usage of disposable elements is often required and, for the disposable element, production costs are crucial. Thus, according to embodiments of the invention, the measurement electronic, such as the measurement electrode, is implemented as part of a reusable element, rather than as part of the disposable element. The measurement chamber can be manufactured as a disposable item in a simple and inexpensive way. Thus, the costs of the pressure sensor may be kept low, while high quality measurement may be achieved.

According to an embodiment of the pressure sensor, the pressure sensor comprises a detector configured to detect the influence of a variation of the shape of the measurement chamber on the electrical field. The detector detects the change in the electric field, the electric field being dependent on the change in the shape of the measurement chamber, wherein the change in the shape of the measurement chamber is effected in dependence on the pressure of the fluid in the measurement chamber.

The present invention is further based on the idea of creating an improved flow measurement sensor comprising a first pressure sensor and a second pressure sensor, at least one of the pressure sensors being formed in accordance with a previously described pressure sensor, and a fluid resistor which is coupled between the first and the second pressure sensors. The flow sensor is adapted to determine a flow rate of a flow through the flow resistor based on pressures sensed by the first and the second pressure sensors. By detecting the pressure of a fluid upstream and downstream from a known fluid resistor, the flow rate can be calculated.

A method for measuring a fluid pressure of a fluid within a measurement chamber comprises the following steps: deforming a wall of the measurement chamber, wherein a shape of the measurement chamber varies depending on a pressure within the measurement chamber. Furthermore, the method comprises detecting an influence of a variation of the shape of the measurement chamber on the electrical field by means of a measurement electrode, wherein the measurement chamber is arranged relative to the measurement electrode to be arranged within a region of an electrical field originating from the measurement electrode upon application of a potential to the measurement electrode.

Embodiments of the invention may be used in any application conceivable, in which fluids are transported, metered, monitored or dispensed, such as medical, pharmaceutical or chemical research, production and industry as set forth above.

In the following, embodiments will be explained with reference to the accompanying drawings, in which:

Fig. 1    illustrates a pressure sensor for measuring a fluid pressure according to a comparative example useful in understanding the invention;

Fig. 2    is a sectional view of an elastic measurement chamber at different internal pressures;

Fig. 3    is a sectional view of an elastic measurement chamber at different internal pressures between two measurement electrodes;

Fig. 4    is a sectional view of an elastic tube with different internal pressures, with a space between the two measurement electrodes and the measurement chamber;

Fig. 5    is a sectional view of an elastic tube with different internal pressures, with mechanically fixed measurement electrodes on the wall of the measurement chamber of a comparative example useful in understanding the invention;

Fig. 6 shows a schematic view of a flow measurement sensor for a fluid; and,

Fig. 7 shows an electrical circuit for operate a fluid pressure sensor.

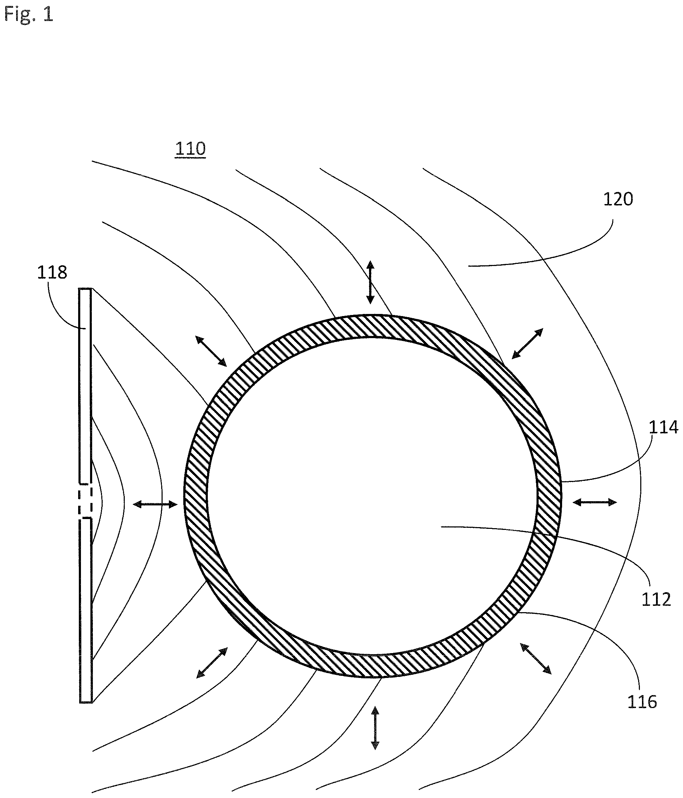

Fig. 1 shows a pressure sensor 110 for measuring a fluid pressure of a fluid 112 within a measurement chamber 114, the measurement chamber 114 enclosing the fluid 112. The fluid 112 can be liquid or gaseous. In the present example and most of the subsequently explained embodiments the measurement chamber 114 is formed as a tube through which the fluid 112 can flow, with entering the measurement chamber 114, for example, through at least one inlet port and leaving same through at least one outlet port thereof. However, alternatively, the measurement chamber 114 is closed, thereby forming some kind of deflating/expanding ball, or has merely an inlet port like a balloon, for example.

The measurement chamber 114 has a mechanically deformable wall 116, a shape of the measurement chamber 114 varying in dependence on a pressure within the measurement chamber 114. The measurement chamber 114 can be manufactured from synthetic material or natural material, for example latex. Depending on the material used and on the thickness of the wall 116 of the measurement chamber 114, the measurement chamber 114 expands more or less markedly when the pressure changes inside the fluid 112, thereby changing its shape. The measurement chamber 114 can, for example, be formed as an elastic tube or an elastic balloon or an elastic ball.

The pressure sensor further comprises a measurement electrode 118, wherein the measurement chamber 114 is arranged relative to the measurement electrode 118 to be arranged within a region of an electrical field 120 originating from the measurement electrode 118 upon application of a potential to the measurement electrode 118. The measurement electrode 118 can be charged with a voltage, thereby generating an electric field 120 which propagates in the environment. Consequently, an influence of a variation of the shape of the measurement chamber 114 on the electrical field 120 can be detected. The change in the electric field 120 can be determined, for example, by changing the permittivity, i.e. the dielectric conductivity for the electrical field 120. The permittivity can be determined by measuring the change in capacitance of the measurement electrode 118.

The shape (geometry) of the measurement chamber 114 depends on the fluid pressure within the measurement chamber 114 and a change of the shape of the measurement chamber 114 influences the electrical field 120 generated by the measurement electrode 118. For example, the measurement chamber 114 may be configured to bend, inflate, deflate and/or deform dependent on the fluid pressure within the measurement chamber 114. This change in geometry results in a change in the amount and/or distribution of the dielectric material arranged in the electric field 120 and this change can be detected and converted into an electrical signal indicative of the fluid pressure within the measurement chamber 114.

In contrast to known droplet sensors, which are described in the previously mentioned publication, "Noncontact Determination of Velocity and Volume of Nanoliter Droplets on the Fly", in case of the present pressure sensor 110 the dielectric material between the measurement electrodes 118 consists of the measurement chamber 114 and the fluid 112 contained therein, which is in fluidic communication with the pressure to be measured through at least one inlet port.

The electrode 118 as shown in Fig. 1 may also be divided into two or more electrodes 118 as indicated by the dotted lines. The two or more electrodes 118 may be co-planar with each other and may have different electrical potentials. The electric field 120 would then be generated by the two or more electrodes 118. As described previously, an influence of the shape of the measurement chamber 114 on the electric field 120 can be detected.

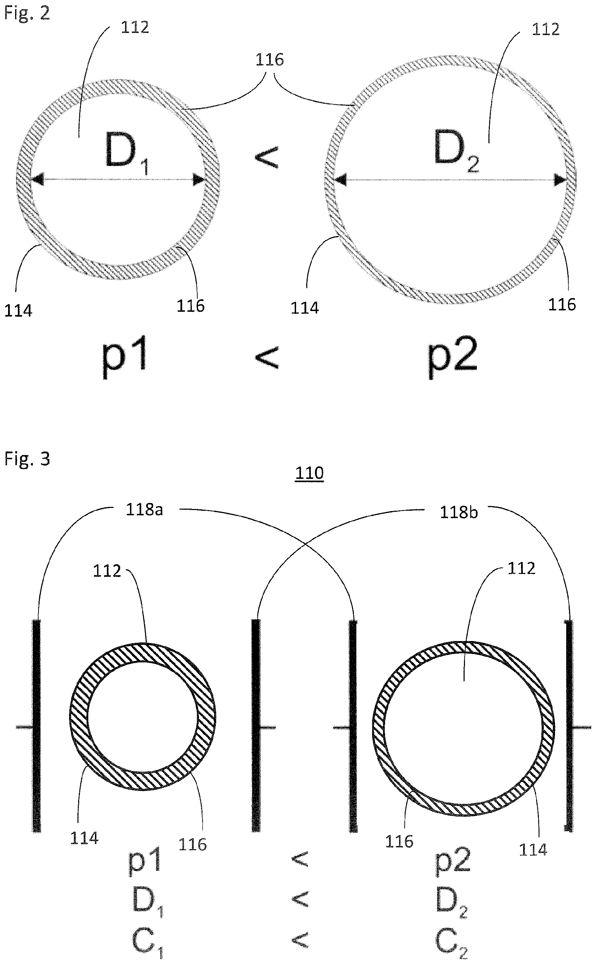

Fig. 2 shows a sectional view of an elastic measurement chamber 114 at different internal pressures. On the left side of Fig. 2, a fluid 112 in the chamber 114 has a pressure p1, and on the right side of Fig. 2, the fluid 112 in the chamber 114 has a larger pressure p2.

The fluid 112 on the left side is under lower pressure than the fluid 112 on the right side. The diameter of the measurement chamber 114 increases with increased internal pressure. The increasing rate is dependent on the material properties of the measurement chamber 114, for example the elastic modulus and / or the dimensions and shape of the measurement chamber 114 like for example on the thickness of the wall 116 of the measurement chamber 114. Since internal pressure p2 is higher compared to the internal pressure p1, at a constant pressure outside the measurement chamber 114, the cross section D2 is larger than cross section D1.

Fig. 3 shows a sectional view of an embodiment of a pressure sensor 110 comprising an elastic tube as a measurement chamber 114 and two measurement electrodes 118a, 118b. The measurement chambers 114 is arranged between the two measurement electrodes 118a, 118b. The left part of Fig. 3 shows the pressure sensor 110 with a lower fluid pressure p1 within the measurement chamber 114 and the right part of Fig. 3 shows the pressure sensor 110 with a higher fluid pressure p2 within the measurement chamber 114. Fig. 3 further shows the diameter $D_1$, $D_2$ of the measurement chamber 114 for both cases and a capacity $C_1$, $C_2$ between the measurement electrodes 118a, 118b for both cases. As already described referring to Fig. 2, the cross section of the measurement chamber 114 will increase when the pressure in the measurement chamber 114 increases and the pressure outside the measurement chamber 114 remains constant.

The pressure sensor 110 shown in Fig. 3 comprises two measurement electrodes 118a, 118b which form a capacitor. The measurement electrodes 118a, 118b are arranged at a fixed distance from each other. The measurement chambers 114 is arranged between the two measurement electrodes 118a, 118b, with a space between each of the two measurement electrodes 118a, 118b and the measurement chamber 114.

Without loss of generality, the measurement chamber 114 may be a cylindrical measurement chamber 114 that is formed by a tube having a circular cross section and an elastic wall 116. In other embodiments, the shape of the cross section of the measurement chamber 114 may be different, such as oval, rectangular or square. To form the pressure sensor 110 the tube can be inserted centrically between the measurement electrodes 118a, 118b representing an open plate capacitor, for example.

Different electrical potentials can be applied at the measurement electrodes 118a, 118b. The different electrical potentials generate an electrical field between the two measurement electrodes 118a, 118b. For an arrangement of the electrodes as open plate capacitor the electrical field is thereby equal to:

$$E = \frac{\varepsilon \cdot A \cdot U^2}{2 \cdot d}$$

wherein E is the electrical field, $\varepsilon$ is the permittivity of the fluid, A is the plate area, U is the electrical potential and d is the plate separation.

The formula shows that the electrical field is dependent on the permittivity. The electric field changes when materials which have different permittivities change their amount and / or distribution in the electrical field. For example, in the measurement chamber 114 there is a fluid 112 having a permittivity which is different from that of air surrounding the measurement chamber 114 and the measurement electrodes 118a, 118b. If the pressure of the fluid 112 in the measurement chamber 114 increases while the pressure of the surrounding air remains constant, the shape of the measurement chamber 114 will vary, and the measurement chamber 114 will expand. Consequently, the amount of fluid 112 inside the electrical field changes as well, and this can be measured as a change in the capacity of the measurement electrodes 118a, 118b.

For a partially filled capacitor is the permittivity $\varepsilon$ equal to:

$$\varepsilon = \varepsilon_0 \cdot \varepsilon_r$$

wherein $\varepsilon_r$ is the relative permittivity of the material, and $\varepsilon_0 = 8.854187817.. \times 10\text{-}12$ F/m is the vacuum permittivity.

The capacity C is equal to:

$$C = \frac{\varepsilon_0 \cdot A}{d_0 - d_e \cdot \left(1 - \frac{1}{\varepsilon_r}\right)}$$

Wherein C is the capacitance of a partly filled parallel plate capacitor, A is the surface area of the electrodes, $d_0$ is the distance of the electrodes, $d_e$ is the width of the dielectric material in between the electrodes, and $\varepsilon_r$ is the relative permittivity of the dielectric material.

The formula shows that a change in the width/amount of the dielectric material, which is described by the dielectric effect, leads to a change in the capacity of the capacitor. Consequently, if the two materials inside and outside of the measurement chamber 114 have different permittivities, an influence of a variation of the shape of the measurement chamber 114, thus an increase or decrease of the amount of the fluid 112 inside the measurement chamber 114, caused by a variation of the pressure, on the electrical field E at a constant voltage U can be detected as a change in the capacity C of the capacitor.

The measurement chamber 114 can consist of an elastic tube, for example, which changes its diameter as a function of the pressure, see Fig. 3. It is obvious that such a change in diameter will lead to a change in the dielectric properties between the measurement electrodes 118a, 118b of an open plate capacitor that is placed to be perpendicular to the elastic tube of the measurement chamber 114 as sensor device. In other words, the plates of the plate capacitor are arranged perpendicular to a longitudinal axis of the elastic tube of the measurement chamber 114.

Parts of the pressure sensor 110 that are in contact with the fluid 112 can be realized as low cost disposables. The present embodiments represents a capacitive pressure sensor 110 consisting of a pair of measurement electrodes 118a, 118b that form an open plate capacitor with two measurement electrodes 118a, 118b. Such a capacitor allows for the detection of the volume and the local distribution of a dielectric material which is present between the measurement electrodes 118a, 118b of the pressure sensor 110.

In other embodiments, the pressure sensor 110 may have more than two electrodes 118; two or more electrodes 118 may have the same electric potential.

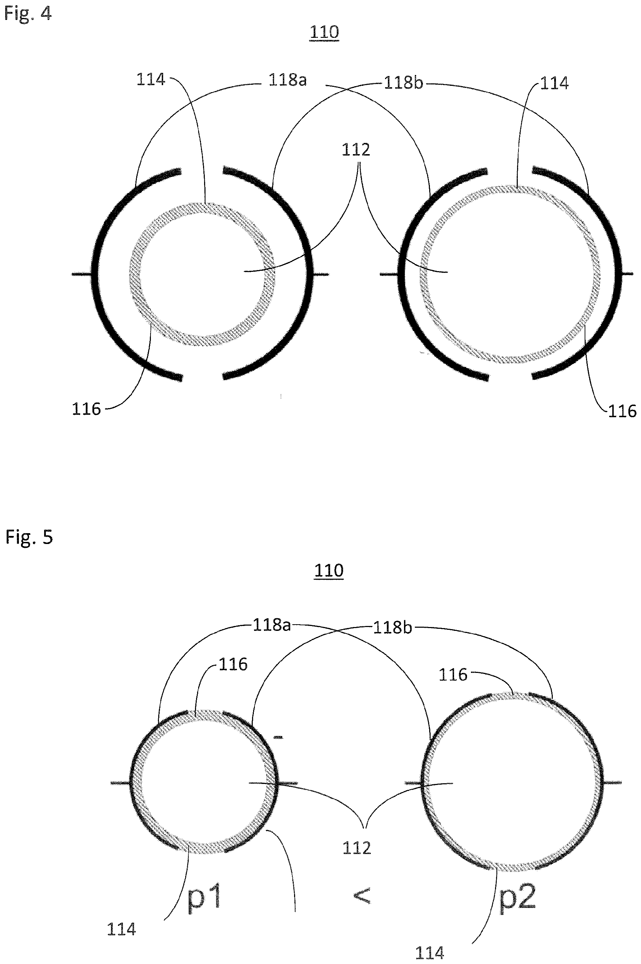

Fig. 4 shows sectional views of an embodiment having arcuate measurement electrodes 118a, 118b in contrast to the measurement electrodes 118a, 118b in Fig. 3. The embodiment further comprises an elastic tube as measurement chamber 114. Figure 4 shows the elastic tube with different internal pressures. The left part of Fig. 4 shows the pressure sensor 110 with a lower fluid pressure within the measurement chamber 114, and the right part of Fig. 4 shows the pressure sensor 110 with a higher fluid pressure within the measurement chamber 114. The arcuate shape enables the measurement electrodes 118a, 118b to be placed closer to the measurement chamber 114, whereby the measuring accuracy can be increased.

In other embodiments, different measurement electrode 118a, 118b arrangements are feasible in order to improve, adjust or modify the sensitivity of the occurring changes in dependence on the measurement chamber 114 geometry.

In Fig. 4 the measurement electrodes 118a, 118b are arranged at a fixed distance from each other, and the measurement chamber 114 is arranged between the two measurement electrodes 118a, 118b, with a space between each of the two measurement electrodes 118a, 118b and the measurement chamber 114. The shape of the measurement chamber 114 varies depending on the pressure within the measurement chamber 114. A wall 116 of the measurement chamber 114 is mechanically deformable depending on the pressure within the measurement chamber 114. The measurement chamber 114 is arranged relative to the two measurement electrodes 118a, 118b within a region of an electrical field. The electrical field originates from the measurement electrodes 118a, 118b upon application of an electrical potential to the measurement electrodes 118a, 118b. An influence of a variation of the shape of the measurement chamber 114 on the electrical field can be detected. If the permittivity of the fluid 112 within the measurement chamber 114 is different from the permittivity of the material outside of the measurement chamber 114, the variation of the shape of the measurement chamber 114 will change the permittivity of the capacitor in the manner shown in the formula in Fig. 3. If the permittivity of the fluid 112 within the measurement chamber 114 is the same like the permittivity of the material outside of the measurement chamber 114, the variation of the shape of the measurement chamber 114 can still cause a measurable effect, since the distribution of the dielectric material of the measurement chamber 114 itself causes a change in the distribution of the dielectric material in the region of the electric field.

The measurement electrodes 118a, 118b in Fig. 4 are separated from the measurement chamber 114 such that there is no mechanical contact between them. The distance of the measurement electrodes 118a, 118b is constant and not influenced by the pressure of the fluid 112 within the measurement chamber 114. Only the change in the measurement chamber 114 geometry (here the tube diameter) as well as the increasing volume of the internal fluid 112 (amount and distribution of dielectric material) causes the change in capacity in this case. The gap between the measurement electrodes 118a, 118b remains constant.

Fig. 5 shows sectional views of a comparative example of a pressure sensor 110 having arcuate measurement electrodes 118a, 118b, wherein the measurement electrodes 118a, 118b are movable with respect to each other. The example further comprises an elastic tube as measurement chamber 114. Fig. 5 shows the elastic tube with different internal pressures. The left part of Fig. 5 shows the pressure sensor 110 with a lower fluid pressure within the measurement chamber 114, and the right part of Fig. 5 shows the pressure sensor 110 with a higher fluid pressure within the measurement chamber 114. The arcuate shape enables the measurement electrodes 118a, 118b to be placed such that they are in contact with the measurement chamber 114, whereby the measuring accuracy can be increased.

At least one of the measurement electrodes 118a, 118b can be mechanically fixed to the deformable wall 116 of the measurement chamber 114. In the example of Fig. 5, both measurement electrodes 118a, 118b are mechanically fixed to the deformable wall 116 of the measurement chamber 114. When at least one of the measurement electrodes 118a, 118b is in contact with the deformable wall 116 of the measurement chamber 114, the distance between the measurement electrodes 118a, 118b will change with deformation of the deformable wall 116. In this example, the capacity of the capacitor may vary more strongly than in the embodiment of Fig. 4 because the permittivity and the plate separation of the measurement electrodes 118a, 118b may change the capacity in the same way. In this manner, the measurement accuracy can be increased.

In embodiments, two measurement electrodes may be arranged coaxially with respect to each other to form a capacitor, wherein the measurement chamber may be arranged so that a variation in the shape of the measurement chamber influences the capacitance between the two coaxial measurement electrodes. At least one of the coaxial measurement electrodes may be arranged on the measurement chamber.

In order to exploit also the deformation or displacement of the measurement electrodes 118a, 118b themselves in addition to exploiting the change in diameter of the measurement chamber 114 (tube) and the increasing fluid 112 volume, is it possible to position elastically suspended measurement electrodes 118a, 118b (e.g. meander structures or planar electrodes suspended with a spring) to be in contact with the walls 116 of the measurement chamber 114.

For any embodiment, the following may be said: Any change caused by a pressure change inside the measurement chamber 114, in the dielectric volume ($\varepsilon_r$) as well as in its spatial distribution leads to a change in the measurement electrode's 118, 118a, 118b capacity, which may be transferred to a readable voltage level and is taken as a quantitative measure. The correlation between the dielectric volume and the change in capacity may exhibit high linearity. Thus, calibration of the system to an external reference pressure may be readily achieved. For a non-linear relationship between capacity and pressure, more complex calibration functions can be empirically determined in order to relate the change in capacity to the pressure inside the measurement chamber 114 and to use the system as a pressure sensor 110.

The fluid 112 (liquid or gas) causing the pressure is separated from the measurement electrode(s) 118, 118a, 118b and the sensor electronics by the walls 116 of the measurement chamber 114. Since there is no fixed mechanical connection between the measurement chamber 114 and the measurement electrodes 118, 118a, 118b they can be easily separated. Even in the event that the outer walls 116 of the measurement chamber 114 were to touch the measurement electrodes 118, 118a, 118b (which could be the case in specific embodiments), the walls 116 of the measurement chamber 114 would still prevent the measurement electrodes 118, 118a, 118b from being contaminated with liquid. Thus, all elements contaminated with fluid (i.e. the measurement chamber 114) can be removed and disposed of. Thereby, a semi-disposable pressure sensor 110 enabling measurement of pressure in liquids and gases is realized, where the expensive measurement electronics and measurement electrodes 118, 118a, 118b can be reused.

The sensitivity of the pressure sensor 110 depends on the properties (i.e. electrical permittivity) of the fluid 112 within the measurement chamber 114, the properties of the measurement chamber 114 (i.e. electrical permittivity, elasticity, wall thickness, Young's modulus, ...) and the arrangement (i.e. size, shape, distance, etc.) of the measurement electrode 118, 118a, 118b. Of course, an amplifying circuit of the pressure sensor 110 itself may play a major role for the presented application. Increased amplification may lead to higher signal amplitudes, and a low signal to noise ratio (SNR) may lead to increased sensitivity.

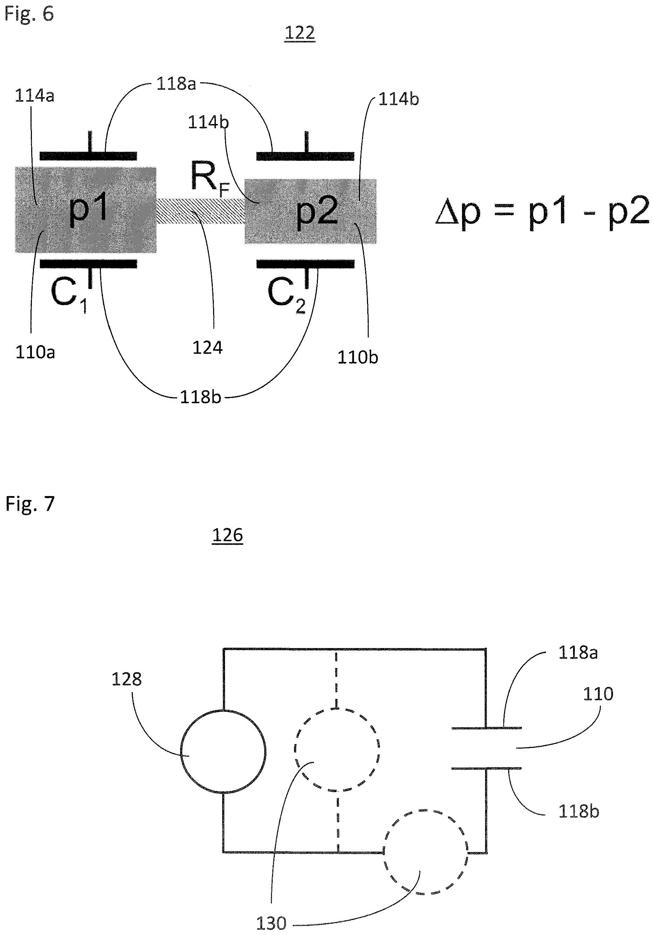

Fig. 6 shows a flow measurement sensor 122 comprising a first pressure sensor 110a and a second pressure sensor 110b, at least one of the pressure sensors 110a, 110b being formed in accordance with the above-mentioned pressure sensor. A fluid resistor 124 is coupled between the first and the second pressure sensors 110a, 110b. The flow measurement sensor 122 is adapted to determine a flow rate of a fluid 112 through the fluid resistor 124 based on pressures sensed by the first and the second pressure sensors 110a, 110b. The effective resistance of the flow resistor 124 depends on the viscosity of the fluid 112 that is measured.

Measuring the pressure by means of a disposable measurement chamber 114a, 114b as described above enables the realization of a disposable flow measurement sensor 122 for fluids in a straightforward way by the differential pressure method.

A well-defined fluidic resistor 124 (e.g. tube, micro channel, etc.) is inserted between two pressure sensors 110a, 110b. Measuring the pressure upstream and immediately downstream from the known fluidic resistor 124 allows for calculation of the causative flow, for example by means of Bernoulli's law of energy conservation:

$$p + \rho \cdot g \cdot h + \frac{1}{2} \cdot \rho \cdot v^2 = \text{const.}$$

wherein p is the pressure, $\rho$ is the density of the fluid; g is the gravity, h is the height, and v is the velocity.

Neglecting the hydrostatic pressure enables calculation of the pressure drop $\Delta p$ along the fluidic resistor 124 which is given by:

$$\Delta p = \frac{\rho \cdot I_v^2}{2 \cdot A_2^2} \cdot \left(1 - \left(\frac{A_1}{A_2}\right)^2\right)$$

Solving for the fluid flow *IV* yields an equation that relates the flow rate to geometrical parameters (i.e. the cross section at inlet and outlet *A1* and *A2*) and the pressure drop determined from the first and the second pressure sensors 110a, 110b.

For viscous flows, more sophisticated formulas can be applied to relate the pressure drop to the flow more precisely, or even empirical data from a calibration experiment can be used as transfer function to correlate (connect) differential pressure with flow rate. Regardless of how the flow rate is calculated from the pressure, the main setup for a disposable flow sensor according to the differential pressure method is given by a first disposable pressure sensor 110a, as was described before, that is in fluidic communication with the one end of a defined fluidic resistor 124 and a second pressure sensor 110b, as was described before, that is in fluidic communication with the other end of the defined fluidic resistor 124, as is sketched in Fig. 6.

Fig. 7 shows an electrical circuit 126 for operating a pressure sensor 110 for a fluid 112. The circuit comprises a signal source 128 which generates an electrical signal. The signal source 128 is connected with the measurement electrodes 118a,b of the pressure sensor 110 so as to apply a voltage there between and generate an electrical field between the electrodes. It should be mentioned, that merely one measurement electrode e.g. 118a may be present. In that case, the other measurement electrode e.g. 118b may be formed by ground. The signal source 128, thus, generates a signal for measuring the capacitance of the measurement electrodes 118a, 118b. The capacitance of the measurement electrodes 118a, 118b may vary depending on the electrical field of the measurement electrode 118a, 118b and/or the distance between two electrodes 118a, 118b. Both parameters can be influenced by the pressure of the fluid 112 in the pressure sensor 110. The signal applied by source 128 may be an AC signal.

Moreover, the circuit 126 may comprises a measuring instrument 130. The measuring instrument 130 may be connected in series or in parallel with the measurement electrodes 118a, 118b. The measuring instrument 130 may also be part of the signal source 128 or control the output of the signal source 128. The measuring instrument 130 measures, for example, the current or the voltage of a measuring signal and may generate an output signal or show a value of the measuring signal on a display unit. For example, an AC current source, as an signal source 128, may be applied at the measurement electrodes 118a, 118b. The measuring instrument 130 is connected in parallel with the measurement electrodes 118a, 118b and is measuring a voltage potential over the measurement electrodes 118a, 118b. Depending on the predetermined current $I_C$ plus the Frequency f and the measured voltage potential $U_C$, the impedance $X_C$ respectively C may be determined.

The capacity C is equal to:

$$C = \frac{I_C}{2 \cdot \pi \cdot f \cdot U_C}$$

The described pressure and flow measurement sensor concept is based on a capacitive measurement principle and it allows for easy separation of the parts contaminated with fluid (measurement chamber 114) from the measurement electrodes 118, 118a, 118b.

Thus, a disposable sensor system can easily be realized which consists of a permanent sensor part ("electrodes" and "electronics") and a disposable part (measurement chamber 114), being easily exchangeable and being the only part that is contaminated with fluid 112. Thereby, the measurement electrodes 118, 118a, 118b are connected to an electronic amplifying circuit and integrated into a housing that has to be considered as a permanent part, whereas the elements contaminated with fluid, i.e. the measurement chamber 114 and fluidic supply lines etc., are considered as low-cost disposables.

The measurement principle of enabling this separation into permanent and disposable sensor components is based on the mechanical deformation of the measurement chamber 114, caused by the change in the fluidic pressure inside of same. The deformation is detected by capacitive transduction by means of electrodes (measurement electrodes 118, 118a, 118b) outside the measurement chamber 114. These measurement electrodes 118, 118a, 118b are contained in the permanent sensor part, and the change in capacity of the measurement electrodes 118, 118a, 118b caused by deformation of the measurement chamber 114 can be transferred to a readable voltage level by the electronic amplification. By calibration of the change in capacity versus an external pressure normal, a disposable pressure sensor 110 can be realized. Based on such a pressure sensor 110, a flow measurement sensor 122 in accordance with the differential pressure principle can be realized in a straightforward manner as well.

In each of the embodiments, the measurement chamber 114 may be a disposable element, wherein the measurement electrode 118, 118a, 118b can be part of a reusable element. Interestingly, the change in capacity measured in accordance with above embodiments is achieved by a change in the dielectric properties of the measurement chamber 114 located between the measurement electrodes 118, 118a, 118b rather than by changing any distance between measurement electrodes. Likewise, all of the measurement electrodes 118, 118a, 118b can be completely detached from the part contaminated with fluid (i.e. "measurement chamber 114") and none of the measurement electrodes 118, 118a, 118b needs to be firmly connected to a fluid contaminated part of the sensor. In certain embodiments (see Fig. 3 and 4), the measurement electrodes 118, 118a, 118b are not even in mechanical contact with the outer surface of the fluid contaminated part (i.e. "measurement chamber 114"). Nevertheless, in certain embodiments the distance of the measurement electrodes 118, 118a, 118b might change as well, like described before, leading to an additional effect in change of capacity that might be exploited to increase the measurement accuracy and/or sensitivity.

The dielectric properties in the region of the electric field depend on the fluid 112, the measurement chamber 114 and the media surrounding the measurement chamber 114. To obtain accurate measurement values, the pressure sensor 110 and the flow measurement sensor 122 should be adjusted depending on the material of the measurement chamber 114, the fluid 112 in the measurement chamber 114 and the media surrounding the measurement chamber 114 such as, for example, air. This adjustment may be a calibration of the pressure sensor 110 or the flow measurement sensor 122 with a reference object or setting.

In embodiments of the pressure sensor 110, that part of the measurement chamber 114 which is deformed by the pressure (i.e. wall or tube) does not constitute a measurement electrode 118, 118a, 118b and it is not electrically contacted.

The measurement principle of this publication by Chia-Chu Chiang, Chou-Ching K. Lin, Ming-Shuang Ju, "An implantable capacitive pressure sensor for biomedical applications", Sensors and Actuators A 134 (2007) 382-388, is based on the deformation of the dielectric material (PDMS) that leads to a change in the electrode distance. "When a pressure is applied to the sensor, the gap between two sensing electrodes is reduced and the capacitance rises accordingly". The electrical field is not created inside of the tube. That is to say, the medium in the tube does not contribute to the measurement effect. In the present embodiments the gap between the electrodes may remain constant. The pressure-sensitive element (PDMS) cannot be separated from the measurement electrodes. The electrodes have to be disposable together with the rest of the device. In the present embodiments of pressure sensors, the "measurement chamber", which is the pressure-sensitive part of the device, can be separated from the electrodes. The measurement electrodes are non-disposable parts of the disposable sensor.

In the flow metering of the publication US4,384,578, the fluid contaminated part is disposable and easily exchangeable; however the flow metering is effected by means of a thermal principle which is completely different from the proposed capacitive transduction mechanism.

In the pressure metering of the publication JP3149030A, the fluid contaminated part is disposable and easily exchangeable; however the pressure metering is done by a conventional MEMS pressure sensor which is completely different than the proposed capacitive transduction mechanism.

In the flow meter of the publication WO94/04073A1, the sensor is not in contact with the body fluid to be measured since the flow metering is done by an acoustic principle (Doppler shift) which is completely different than the proposed capacitive transduction mechanism.

In the flow meter of the publication JP2004117366A, the fluid-contaminated part is disposable and easily exchangeable; however the flow metering is done by a rotating disc that is read out by an optical sensor (LED & photo diode) which is completely different than the proposed capacitive transduction mechanism.

The pressure sensor of the publication WO2006/060226A1 consists of a permanent electrode and a detachable electrode fixed to a deformable membrane to enable a capacitive measurement principle. In contrast to the presented embodiments , firstly, the change in capacity is caused by a distance change between the two electrodes, and secondly, one of the electrodes has to be disposed with the fluid-contaminated part (i.e. membrane). Both features are different from the presented embodiments.

The flow meter of the publication by Cheng-Ta Chiang, Yu-Chung Huang, "A Semicylindrical Capacitive Sensor With Interface Circuit Used for Flow Rate Measurement", IEEE Sensor Journal, Vol. 6, No. 6, 2006, 1564 - 1570, comprises a semi-cylindrical capacitive sensor used for flow rate measurement. The capacitance changes in dependence on the amount of non-polarized fluid flowing through the electric field per time unit. The flow sensor can measure large flow rates (~ L / min) only. The flow sensor does not indicate a radial extension of the measurement chamber, in contrast to the presented embodiments. The presented embodiments of a flow measurement sensor comprise two pressure sensors and is based on a differential-pressure principle.

With other words: The embodiments shows a semi-disposable pressure sensor 110 for measuring fluid pressure consists of a reusable body and a disposable measurement chamber 114 having at least one inlet port to be connected with the fluidic pressure to be measured, whereas the re-usable body has at least one measurement electrode 118 for capacitive measurement in proximity to the disposable measurement chamber 114, which is made of elastic material so that it can change its shape or volume upon application of a fluid 112 pressure through the inlet port, being detachable from the reusable body.

The semi-disposable pressure sensor may have two electrodes which may by arranged opposite each other. By means of the semi-disposable pressure sensor, a semi-disposable differential flow sensor may realized.

List of Reference Numerals

| | |
|---|---|
| 110 | pressure sensor |
| 112 | fluid |
| 114 | measurement chamber |
| 116 | wall |
| 118 | measurement electrodes |
| 120 | electrical field |
| 122 | flow measurement sensor |
| 124 | fluid resistor |
| 126 | electrical circuit |
| 128 | signal source |
| 130 | measuring instrument |

**Claims**

1. A pressure sensor (110) for measuring a fluid pressure of a fluid (112) within a measurement chamber (114), comprising:

the measurement chamber (114) having a mechanical deformable wall (116), wherein a shape of the measurement chamber (114) varies depending on a pressure within the measurement chamber (114); and
at least two measurement electrodes (118, 118a, 118b), wherein the measurement chamber (114) is arranged relative to the measurement electrodes (118, 118a, 118b) to be arranged within a region of an electrical field (120) originating from the measurement electrodes (118, 118a, 118b) upon application of a potential to the measurement electrodes (118, 118a, 118b), wherein
the at least two measurement electrodes (118, 118a, 118b) form a capacitor, wherein an influence of a variation of the shape of the measurement chamber (114) on the electrical field (120) can be detected as a change in the capacity of the capacitor,
wherein the measurement electrodes (118, 118a, 118b) are arranged at a fixed distance from each other, and
wherein the measurement chamber (114) is arranged between the two measurement electrodes (118, 118a, 118b), with a space between each of the two measurement electrodes (118, 118a, 118b) and the measurement chamber (114).

2. The pressure sensor according to one of the preceding claims, wherein the measurement chamber (114) is formed by an elastic tube.

3. The pressure sensor according to claim 1 or 2, wherein the measurement electrodes (118, 118a, 118b) comprise arcuate shapes.

4. The pressure sensor according to one of claims 1 to 3, wherein the measurement chamber (114) is a disposable element and wherein the measurement electrode (118, 118a, 118b) is part of a reusable element.

5. The pressure sensor according to one of claims 1 to 4, comprising a detector configured to detect the influence of a variation of the shape of the measurement chamber (114) on the electrical field (120).

6. A flow measurement sensor (122) comprising a first pressure sensor (110a, 110b) and a second pressure sensor (110a, 110b), wherein at least one of the pressure sensors (110a, 110b) is formed according to one of claims 1 to 5, and a fluid resistor (124) which is coupled between the first and the second pressure sensors (110a, 110b), wherein the flow sensor is adapted to determine a flow rate of a fluid (112) through the fluid resistor (124) based on pressures sensed by the first and the second pressure sensors (110a, 110b).

**Patentansprüche**

1. Ein Drucksensor (110) zum Messen eines Fluiddrucks eines Fluids (112) in einer Messkammer (114), wobei der Drucksensor folgende Merkmale aufweist:

   die Messkammer (114) mit einer mechanisch verformbaren Wand (116), wobei eine Form der Messkammer (114) abhängig von einem Druck in der Messkammer (114) variiert; und zumindest zwei Messelektroden (118, 118a, 118b), wobei die Messkammer (114) relativ zu den Messelektroden (118, 118a, 118b) dazu angeordnet ist, in einem Bereich eines elektrischen Feldes (120) angeordnet zu sein, das auf ein Anlegen eines Potentials an die Messelektroden (118, 118a, 118b) hin von den Messelektroden (118, 118a, 118b) ausgeht, wobei die zumindest zwei Messelektroden (118, 118a, 118b) einen Kondensator bilden, wobei eine Wirkung einer Veränderung der Form der Messkammer (114) auf das elektrische Feld (120) als eine Änderung der Kapazität des Kondensators detektiert werden kann, wobei die Messelektroden (118, 118a, 118b) in einer festen Entfernung zueinander angeordnet sind, und wobei die Messkammer (114) zwischen den zwei Messelektroden (118, 118a, 118b) angeordnet ist, wobei zwischen jeder der zwei Messelektroden (118, 118a, 118b) und der Messkammer (114) ein Abstand vorhanden ist.

2. Der Drucksensor gemäß einem der vorherigen Ansprüche, bei dem die Messkammer (114) durch eine elastische Röhre gebildet ist.

3. Der Drucksensor gemäß Anspruch 1 oder 2, bei dem die Messelektroden (118, 118a, 118b) Bogenformen aufweisen.

4. Der Drucksensor gemäß einem der Ansprüche 1 bis 3, bei dem die Messkammer (114) ein wegwerfbares Element ist und bei dem die Messelektrode (118, 118a, 118b) Teil eines wiederverwendbaren Elements ist.

5. Der Drucksensor gemäß einem der Ansprüche 1 bis 4, der einen Detektor aufweist, der dazu ausgebildet ist, die Wirkung einer Veränderung der Form der Messkammer (114) auf das elektrische Feld (120) zu detektieren.

6. Ein Strömungsmesssensor (122), der einen ersten Drucksensor (110a, 110b) und einen zweiten Drucksensor (110a, 110b), wobei zumindest einer der Drucksensoren (110a, 110b) gemäß einem der Ansprüche 1 bis 5 gebildet ist, sowie einen Fluidwiderstand (124) aufweist, der zwischen den ersten und den zweiten Drucksensor (110a, 110b) gekoppelt ist, wobei der Strömungssensor dazu angepasst ist, einen Durchsatz eines Fluids (112) durch den Fluidwiderstand (124) hindurch basierend auf durch den ersten und den zweiten Drucksensor (110a, 110b) erfassten Drücken zu bestimmen.

**Revendications**

1. Capteur de pression (110) pour mesurer une pression d'un fluide (112) à l'intérieur d'une chambre de mesure (114), comprenant:

   la chambre de mesure (114) présentant une paroi déformable mécaniquement (116), où une forme de la chambre de mesure (114) varie en fonction d'une pression à l'intérieur de la chambre de mesure (114); et

au moins deux électrodes de mesure (118, 118a, 118b), où la chambre de mesure (114) est disposée par rapport aux électrodes de mesure (118, 118a, 118b) de manière à être disposée dans une région d'un champ électrique (120) provenant des électrodes de mesure (118, 118a, 118b) après application d'un potentiel aux électrodes de mesure (118, 118a, 118b), dans lequel

les au moins deux électrodes de mesure (118, 118a, 118b) forment un condensateur, où une influence d'une variation de la forme de la chambre de mesure (114) sur le champ électrique (120) peut être détectée comme un changement de la capacité du condensateur,

dans lequel les électrodes de mesure (118, 118a, 118b) sont disposées à une distance fixe l'une de l'autre, et

dans lequel la chambre de mesure (114) est disposée entre les deux électrodes de mesure (118, 118a, 118b), avec un espace entre chacune des deux électrodes de mesure (118, 118a, 118b) et la chambre de mesure (114).

2. Capteur de pression selon l'une quelconque des revendications précédentes, dans lequel la chambre de mesure (114) est formée par un tube élastique.

3. Capteur de pression selon la revendication 1 ou 2, dans lequel les électrodes de mesure (118, 118a, 118b) comprennent des formes arquées.

4. Capteur de pression selon l'une des revendications 1 à 3, dans lequel la chambre de mesure (114) est un élément jetable et dans lequel l'électrode de mesure (118, 118a, 118b) fait partie d'un élément réutilisable.

5. Capteur de pression selon l'une des revendications 1 à 4, comprenant un détecteur configuré pour détecter l'influence d'une variation de la forme de la chambre de mesure (114) sur le champ électrique (120).

6. Capteur de mesure de débit (122) comprenant un premier capteur de pression (110a, 110b) et un deuxième capteur de pression (110a, 110b), dans lequel au moins l'un des capteurs de pression (110a, 110b) est formé selon l'une des revendications 1 à 5, et une résistance de fluide (124) qui est couplée entre le premier et le deuxième capteur de pression (110a, 110b), dans lequel le capteur de débit est adapté pour déterminer un débit d'un fluide (112) passant à travers la résistance de fluide (124) sur base de pressions détectées par le premier et le deuxième capteur de pression (110a, 110b).

Fig. 1

Fig. 2

Fig. 3

Fig. 4

110

114  118a  118b  114

112

116  116

Fig. 5

110

118a  118b

116  116

p1  <  p2

114  112  114

Fig. 6

122

$$\Delta p = p1 - p2$$

Fig. 7

126

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4384578 A
- JP 3149030 A
- WO 9404073 A
- JP 2004117366 A
- WO 2006060226 A1
- WO 9404073 A1

### Non-patent literature cited in the description

- **CHIA-CHU CHIANG ; CHOU-CHING K. LIN ; MING-SHUANG JU.** An implantable capacitive pressure sensor for biomedical applications. *Sensors and Actuators A,* 2007, vol. 134, 382-388
- **R. PUERS.** Capacitive sensors; when and how to use them. *Sensors and Actuators A,* 1993, vol. 37- 38, 93-105
- **R.E. OOSTERBROEK ; T.S.J. LAMMERINK ; J.W. BERENSCHOT ; G.J.M. KRIJNEN ; M.C. ELWENSPOEK ; A. VAN DEN BERG.** A micromachined pressure/flow sensor. *Sensors and Actuators,* 1999, vol. 77, 167-177
- **A. ERNST ; L. JU ; B. VONDENBUSCH ; R. ZENGERLE ; P. KOLTAY.** Noncontact Determination of Velocity and Volume of Nanoliter Droplets on the Fly. *IEEE Sensors Journal,* 2011, vol. 11 (8), 1736-1742
- **CHENG-TA CHIANG ; YU-CHUNG HUANG.** A Semicylindrical Capacitive Sensor With Interface Circuit Used for Flow Rate Measurement. *IEEE Sensor Journal,* 2006, vol. 6 (6), 1564-1570